(19) Europäisches Patentamt
European Patent Office
Office européen des brevets

(11) EP 1 359 461 A2

(12) EUROPEAN PATENT APPLICATION

(43) Date of publication:
**05.11.2003 Bulletin 2003/45**

(51) Int Cl.[7]: **G02F 1/361**

(21) Application number: **03076245.4**

(22) Date of filing: **29.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.04.2002 US 136869**

(71) Applicant: **Corning Incorporated**
**Corning, New York 14831 (US)**

(72) Inventors:
- **He, Mingqian**
  **Painted Post, NY 14870 (US)**
- **Shustack, Paul John**
  **Elmira, NY 14905 (US)**
- **Wang, Jianguo**
  **Horseheads, NY 14845 (US)**

(74) Representative: **Poole, Michael John**
**Corning Limited**
**Patents & Licensing Department**
**Quantum House,**
**Maylands Avenue**
**Hemel Hempstead, Herts. HP2 7DE (GB)**

(54) **Low loss electro-optic polymers and devices made therefrom**

(57) The synthesis of novel, high μβ electro-optical chromophores is described. These chromophores are polymerizable with a host polymer or copolymer. The chromophore polymerizable groups comprise epoxy, thioepoxy, oxetane and thiooxetane material which undergo a ring opening polymerization reaction in the presence of a cationic photoinitiator and actinic radiation. The high μβ chromophores, mixed with a selected host polymer, copolymer, oligomer, or one or a plurality of polymerizable monomers, can be used to prepare optical waveguides and other optical elements and/or devices. The electro-optical chromophores of the invention can be used as a replacement for $LiNbO_3$ in the formation of electro-optical devices, particularly electro-optical modulators.

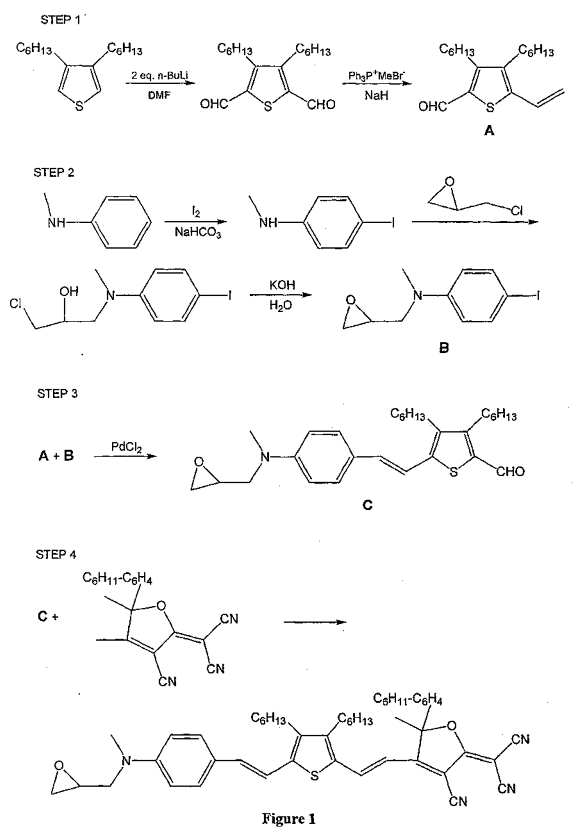


Figure 1

EP 1 359 461 A2

## Description

Field of the Invention

The invention is directed to polymeric materials having low optical loss characteristics and their use in the fabrication of electro-optic devices. In particular, the invention is directed to the preparation of organic electro-optic materials with high electro-optic coefficients, which can be used as an alternative to $LiNbO_3$ in the formation of electro-optic devices, particularly electro-optic modulators.

Background of the Invention

The use of organic electro-optic ("EO") materials in polymeric structures for the production of EO devices, particularly modulators, has been the subject of much research and development over the last 10-15 years. EO modulators are devices that can act as electrically controlled switches, and are used to turn on or off a beam of light passing through the modulator. Modulators are controlled (turned on/off) by the imposition of an electric field at radio frequencies, and are important in optical communications systems because they are used to encode information on the beam of light passing through the system. This encoded information is then transmitted through the system via optical fibers as a series of on/off signals. Factors important to modulator performance include the bandwidth (the number of times the modulator can perform the on/off operation per unit time); the drive voltage, $V_\pi$, which is the electrical voltage required to turn the modulator on and off; and the optical insertion loss, which is the amount of light lost as a light beam travels through the modulator (while in the "on" state, but not as a result of being turned on/off). Of particular importance is the drive voltage, $V_\pi$, which should be as low as possible.

In the past, EO modulators have been made using inorganic non-centrosymmetric crystals such as those made from $LiNbO_3$. However, as the speed at which all-optical networks operate increases to 40+ gigabytes/second ("Gb/s"), the importance of finding new materials for EO modulators has become paramount because inorganic crystals such as $LiNbO_3$ are approaching their intrinsic operating limits. A great deal of effort has been devoted to making new materials which can be used to make EO modulators that can operate at 40+ Gb/s. These efforts include, among other things, the development of suitable polymeric materials incorporating organic EO chromophores (so called because they are generally strongly colored and absorb light at a specific frequency).

Polymeric materials incorporating EO chromophores and suitable for use in EO devices are frequently referred to as EO polymers. Over the past decade or so, research has resulted in the synthesis of new EO polymers and improved optical design with the result that modulators with record high speed, over 110 Gb/s, and low driving voltages have been achieved. These EO polymers typically consist of an EO chromophore as the active element and a thermally-stable amorphous polymer as the backbone, host or supporting material. In general, molecules suitable as EO chromophores have been found to have an electron donating structure on one end and an electron accepting structure on the other end, with the two ends being connected by a conjugated molecular structure that permits electron polarization within the molecule in response to an applied, controlling electric or radio frequency signal. Especially desirable EO polymers and EO chromophores should be substantially optically transparent at telecommunication wavelengths; chemically, thermally and photochemically stable under conditions of use; sufficiently soluble in a solvent or exist as liquid materials to permit their use in the manufacturing of an EO device; and have large dipole moments ("μ") and a large first hyperpolarizibility ("β"). Materials with large μ and β values result in low driving voltages. It is highly desirable that the driving voltage, $V_\pi$ is a low as possible, and a driving of less than 1 volt is particularly sought. For an EO modulator having a Mach-Zehnder architecture, the value of $V_\pi$ can be determined using the equation:

$$V_\pi = \frac{\lambda h}{n^3 r_{33} L \Gamma}$$

where λ is the optical wavelength, *h* is the gap between electrodes, *n* is the refractive index of the EO polymer, $r_{33}$ is the EO coefficient of the polymer waveguide, L is the interaction length and Γ is the modal overlap integral. The value of $r_{33}$ is directly proportional (in the limit of no intermolecular electrostatic interaction) to the product of the molecular dipole moment μ and the hyperpolarizability β with the number density N of the electro-optical chromophores in the polymer matrix. Consequently, large values for these terms result in low $V_\pi$ values. A value of $V_\pi$ < 1 volt would significantly increase the efficiency of optical fiber communication systems.

While great promise has been shown for organic EO chromophores and the EO polymers incorporating them, such materials have exhibited several drawbacks that have prevented their acceptance by the telecommunications industry. One concern is the long term thermal stability of the EO polymers. Another concern is the higher intrinsic optical loss that results when presently known EO polymer waveguides are used at the 1550 nm communication wavelengths. Attempts have been made to solve the thermal stability problem, and also to maintain the alignment of the chromophore within the EO polymer, by covalently bonding the EO molecule to the host polymer to form a highly crosslinked, high glass transition temperature polymeric material. While thermal stability has been improved by crosslinking using polycondensation reactions with host polymeric or pre-polymeric materials, for example, polyimides, polyurethanes and some sol-gel materials, the resulting materials often exhibit higher optical losses due to the presence of residual -OH and -NH groups.

Various methods, with differing success, have been used to prepare EO chromophore-containing EO polymers. Attempts have been made to use free radical polymerization reactions which are widely used by telecommunication equipment manufacturers in the UV curing processes. However, preparation of suitable EO polymers using free radical processes has proved difficult because the high μβ chromophores are sensitive to free radical attack and degradation. As a result of the problems presented by these methods, other approaches to preparing EO polymers containing high μβ chromophores are needed in the art.

Summary of the Invention

In one aspect of the present invention high μβ chromophores are mixed with one or a plurality of selected host polymers (including copolymers), oligomers or polymerizable monomers to form EO polymer compositions that can be cast as films and used to prepare optical elements and/or devices such as, for example, optical waveguides.

Another aspect of the present invention is the synthesis of novel, high μβ chromophores with a cationic-initiator-reactive epoxy material that can undergo a ring opening polymerization reaction in the presence of a cationic photoinitiator and UV radiation. In one representation the chromophores of the invention can be represented by the Structure **I**:

I

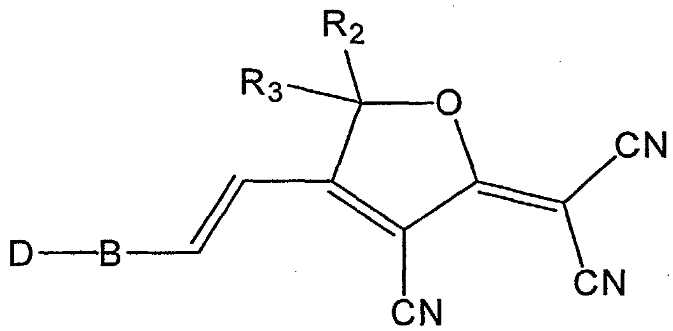

wherein D is an electron donor and preferably an electron donor having one or a plurality of terminally pendent, polymerizable cyclo-oxo or cyclo-thio (rings containing -O- or -S-moieties therein) groups; B is or contains at least one bivalent aromatic ring; $R_2$ and $R_3$ are each, independently, either H or a substituted or unsubstituted $C_1$-$C_{10}$ alkyl, a substituted or unsubstituted $C_2$-$C_{10}$ alkenyl, a substituted or unsubstituted aryl, a substituted or unsubstituted alkylaryl, a substituted or unsubstituted carbocycle, a substituted or unsubstituted heterocycle, or a substituted or unsubstituted cyclohexyl; or $R_2$ and $R_3$ together form a ring structure or substituted ring structure.

In another aspect of the invention, the chromophores can be represented by the Structure **II**.

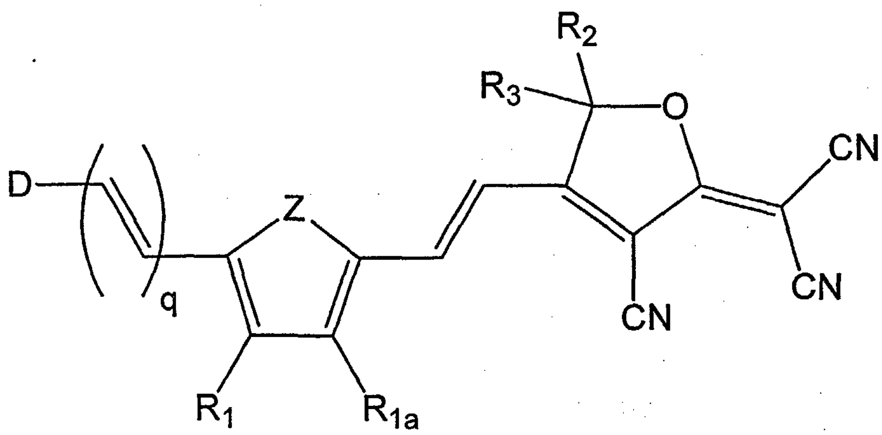

II

wherein

(a) D is an electron donating group, and preferably a donating group of general formula -p-$C_6H_4$-$AR_4$ or -p-$C_6H_4$-p-$C_6H_4$-$AR_4$, and -naphthalene- $C_6H_4$-$AR_4$, wherein A = S or $NR_5$;

Z is O or S;

q is an integer in the range of 1-3;

$R_1$ and $R_{1a}$ are H or $C_1$-$C_{10}$ alkyl groups;

$R_2$ and $R_3$ each are, independently, H, a substituted or unsubstituted $C_1$-$C_{10}$ alkyl, a substituted or unsubstituted $C_2$-$C_{10}$ alkenyl, a substituted or unsubstituted aryl, a substituted or unsubstituted alkylaryl, a substituted or unsubstituted carbocycle, a substituted or unsubstituted heterocycle, or a substituted or unsubstituted cyclohexyl; or $R_2$ and $R_3$ together form a ring structure or substituted ring structure; and

$R_4$ is an epoxy, episulfide, oxetane or thietane group as shown elsewhere herein, and $R_5$ is a $C_1$-$C_6$ alkyl, epoxy, episulfide, oxetane or thietane group as shown elsewhere herein. In one preferred embodiment $R_2$ is methyl and $R_3$ is -4-phenylcyclohexyl (-$C_6H_4$-4-cyclohexyl)

In a further aspect of the invention is a polymeric material containing the high μβ chromophores of the invention can be polymerized and/or cured in the presence of thermal initiators or photoinitiators. In preferred embodiments photoinitiators, and more preferably cationic photoinitiators, are used in practicing the invention.

An additional aspect of the invention is the use of the novel, high μβ chromophores, mixed with a selected host polymer or oligomer to prepare optical waveguides and other optical elements and/or devices.

Another aspect of the invention is that the EO polymer compositions of the invention, when used to fabricate optical and electro-optical elements and devices, exhibit $r_{33}$ values greater than 12 and typically greater than 15, at a wavelength of approximately 1550 nm.

Additional features and aspects of the invention will be set forth in the detailed description which follows, and in part will be readily apparent to those skilled in the art from the description or recognized by practicing the invention as described in the written description and claims hereof, as well as the appended drawings.

It is to be understood that both the foregoing general description and the following detailed description are merely exemplary of the invention, and are intended to provide an overview or framework to understanding the nature and character of the invention as it is claimed.

The accompanying drawings are included to provide a further understanding of the invention, and are incorporated in and constitute a part of this specification. The drawings illustrate one or more embodiments and/or uses of the invention, and together with the description serve to explain the principles and operation of the invention.

Brief Description of the Drawings

Figure 1 is a reaction scheme for the preparation of a mono-epoxy functional EO chromophore.

Figure 2 is a reaction scheme illustrating the change in the reaction path of Figure 1 necessary to prepare a diepoxy-functional EO chromophore.

Figure 3 is a schematic illustrating the overall reaction between an EO chromophore and a representative polymer host used to prepare a crosslinked EO polymer.

Figure 4 is a schematic of the experimental set-up of the laser damage test used for an EO polymer film.

Figure 5 is a graph showing the changes in the refractive indices of EO polymer films as a function of the volume percent of polymer in the EO polymer film.

Figure 6 is a graph showing the optical loss in a slab waveguide as a function of the volume percent of polymer in the EO polymer film.

Figures 7-12 are side views of the steps of a process for fabricating photocurable EO polymer ridge waveguides.

Figures 13-18 are side views of the steps of a process for fabricating EO polymer channel waveguides.

Detailed Description of the Invention

The terms "electron donating group", "electron donor" and "donor" are used interchangeably and refer to substituents which contribute electron density to a conjugated π electron system when the conjugated π electron system is polarized.

The terms "electron withdrawing group", "electron accepting group", "electron acceptor" and "acceptor" are used interchangeably and refer to substituents which attract electron density from a conjugated π electron system when the conjugated π electron system is polarized.

The terms "chromophore" and "EO chromophore", and similar terms, as used herein mean an compound comprising an electron donating group and an electron withdrawing group at opposing ends of a conjugated π electron system.

The term "EO polymer" as used herein means a composition comprising a reaction product of an electro-optical chromophore of the invention and a host polymer.

As used herein, the terms "polymerizable cyclic ethers" and "polymerizable cyclic thioethers" means carbon-oxygen and carbon-sulfur ring systems that are capable of undergoing ring-opening polymerization reactions. Exemplary of these polymerizable cyclic ethers and "polymerizable cyclic thioethers are epoxy, episulfide, oxetane and thietane moieties whose structures are as follows:

epoxy and episulfide moieties wherein Y = O or S,

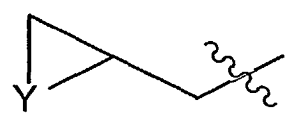

and

oxetane and thietane moieties wherein Y = O or S.

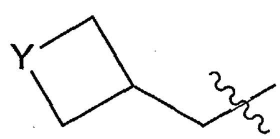

The present invention is directed to the synthesis of EO polymers containing high μβ chromophores that can be used in the cationic polymerization and ring opening polymerization reactions. In one aspect it is directed to high μβ chromophores having represented by the following structure **I** wherein

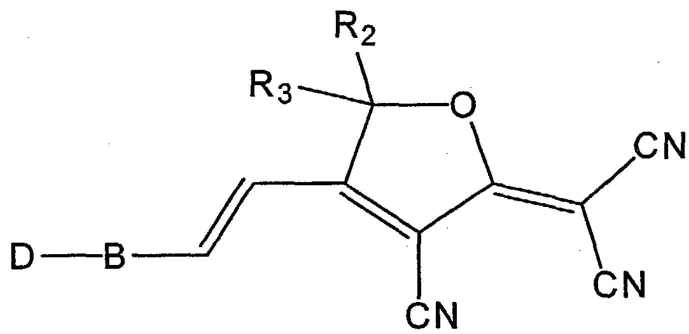

I

D is an electron donor and preferably an electron donor having one or a plurality of terminally pendent, polymerizable cyclic ether or cyclic thioether groups;

B is or contains at least one bivalent aromatic ring;

$R_2$ and $R_3$ are each, independently, either H or a substituted or unsubstituted $C_1$-$C_{10}$ alkyl, a substituted or unsubstituted $C_2$-$C_{10}$ alkenyl, a substituted or unsubstituted aryl, a substituted or unsubstituted alkylaryl, a substituted or unsubstituted carbocycle, a substituted or unsubstituted heterocycle, or a substituted or unsubstituted cyclohexyl; or $R_2$ and $R_3$ together form a ring structure or substituted ring structure.

In a preferred embodiment, the high μβ chromophores of the invention are represented by the following Structure **II.**

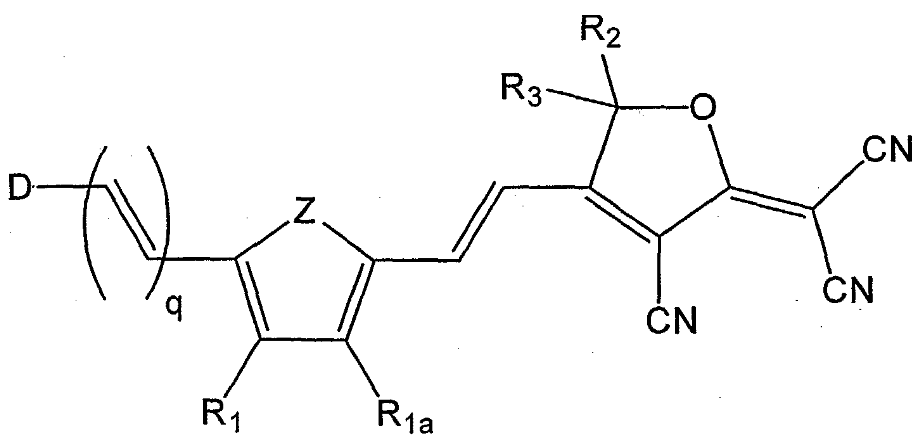

II.

wherein

(a) D is generally an electron donating group selected from the group consisting aromatic and fused aromatic rings having terminally pendent one or more polymerizable groups, and in preferred embodiments D is selected from the group consisting of -p-$C_6H_4$-$AR_4$, -p-$C_6H_4$-$C_6H_4$-$AR_4$ or-napthalene- $C_6H_4$-$AR_4$,

where A = S or $NR_5$, and

$R_4$ is epoxy, episulfide, oxetane or thietane, and

$R_5$, independently of $R_4$, is $C_1$-$C_6$ alkyl, epoxy, episulfide, oxetane or thietane;

Z is O or S,

$R_1$ and $R_{1a}$ are independently H or $C_1$-$C_{10}$ alkyl groups; and

$R_2$ and $R_3$ each are, independently, H, a substituted or unsubstituted $C_1$-$C_{10}$ alkyl, a substituted or unsubstituted $C_2$-$C_{10}$ alkenyl, a substituted or unsubstituted aryl, a substituted or unsubstituted alkylaryl, a substituted or unsubstituted carbocycle, a substituted or unsubstituted heterocycle, or a substituted or unsubstituted cyclohexyl; or $R_2$ and $R_3$ together form a ring structure or substituted ring structure.

The chromophores of the invention, which contain polymerizable epoxy, episulfide, oxetane and thietane groups can be reacted with any host polymer or oligomer containing groups that are reactive with such groups. Without limiting the invention, examples of such host polymers and oligomers are those with pendent epoxy, episulfide, oxetane and thietane groups, hydroxyl groups, amine groups, and other groups known in the art which are reactive with the chromophore's polymerizable cyclic ether and cyclic thioether groups (for example, chromophore epoxy, episulfide, oxetane and thietane groups). The "backbone", "frame" or "main chain" of the host polymers or oligomers containing the groups reactive with the chromophore's reactive groups can be of almost any type and include, generally, polyacrylates, polymethacrylates, polyethers and polythioethers, polysulfones, polyesters, maleimide-acrylate or methacrylate copolymers, vinyl carboxylates, vinyl acetate or chloride, ethylene, propylene, stryrene, and similar polymers, copolymers and oligomers known in the art. Preferred materials have high $T_g$ and low optical loss at telecommunication wavelengths. The chromophore-reactive groups pendent from the host polymer or oligomer may be directly attached to the backbone or may be attached by means of any suitable linking group known in the art. Further, in preferred embodiments part or all of the hydrogen atoms present in the host polymers may be replaced by fluorine or by fluorinated or highly fluorinated alkyl groups.

The reaction between the reactive groups of the chromophore and the host polymer maybe carried out thermally or carried out by the use of initiators that are either thermally or photolytically activated to initiate polymerization. In preferred embodiments, the initiators are cationic initiators and in particular photoactivated cationic initiators. Actinic radiation generally may be used. Examples of such preferred photoinitiators include triarylsulfonium, tetraalkylphosphonium and diaryliodinium salts of large protected anions such as hexafluorophosphates or antimonates. These compounds are stable at room temperature, readily soluble in chromophore/host polymer mixtures, and are insensitive to room lighting.

To illustrate the invention, novel high $\mu\beta$ chromophores that contain cationic-initiator-reactive epoxide functional groups were prepared according to the schemes shown in Figures 1 and 2. These chromophores can undergo ring opening polymerization in the presence of a cationic photoinitiator and UV radiation. The novel chromophores and additional analogs described herein, either separately or in combination, can be reacted with selected polymeric or oligomeric materials, and/or additionally one or a plurality of selected monomers, in the presence of a cationic photoinitiator and UV radiation to form a highly crosslinked polymeric material suitable for use as an optical elements and devices; for example, optical waveguides. In a particular example, the chromophores and resulting polymeric materials made with the chromophores can be used in electro-optic modulators.

In the examples given herein, subsequent to their preparation the novel chromophores of the invention, and analogs, used singly or as a mixture, were mixed with highly fluorinated, photosensitive maleimide-based copolymers having epoxide-terminated side chains, applied to a surface, and cationically cured a to produce a highly crosslinked polymeric network. During this process, a photomask was used to exemplary fabricate polymeric waveguides by a direct photolithography process as shown in shown in Figures 7-12 and 13-18 and described herein.

Example 1: Preparation of an EO Chromophore With One Polymerizable Group.

The following reaction scheme, illustrated in Figure 1, describes the preparation of a monoepoxy-functional EO chromophore according to the present invention. Similar reactions were carried out to prepare episulfide, oxetane and thietane containing EO chromophores. The examples given herein are for illustration purposes and are not to be taken as limiting the invention. The preparation of the electron withdrawing portion of the chromophore is described in PCT International Publication No. WO 01/98287 Al; and additional description for preparing chromophores is.

The reactions shown in Figures 1 and 2 were carried out using methods well known by one skilled in the art. For example, solvents such as tetrahydrofuran or other ethers were used for the lithiation, aldehyde formation and conversion, and reduction reactions shown in Figure 1, Step 1. The palladium chloride-catalyzed condensation reaction of Figure 1, Step 3, was carried out in an ether such as tetrahydrofuran or other suitable solvent. All reactions were carried out in standard laboratory glassware under an argon atmosphere.

Referring now to Figure 1, in Step 1 a 3,4-dialkylthiophene was treated with two equivalents of butyllithium and dimethylformamide, followed by hydrolysis, to form a 3,4-dialkylthiophene-1,4-dialdehyde. In Figure 1, Step 1, while the alkyl groups ($R_1$ and $R_{1a}$ as shown in Structure II) are shown as being hexyl ($C_6H_{13}$), other alkyl groups in the $C_1$-$C_{10}$ range can also be used. The 3, 4-dialkyl thiophene-1, 4-dialdehyde was then treated with methyltriphenylphosphonium bromide and sodium hydride to convert one of the aldehyde groups into a vinylic group ($-CH=CH_2$) attached to the thiophene ring as shown in compound A.

In Step 2, *N*-methylaniline was reacted with iodine in the presence of sodium bicarbonate to form 4-iodo-*N*-methyaniline. This product was subsequently reacted with epichlorohydrin to form 4-iodo-*N*-methyl-*N*-(3-chloro-2-hydroxypropyl)aniline. The resulting chlorohydrin moiety was then dehydrohalogenated to form the corresponding epoxide (Compound B).

In Step 3, compounds A and B were coupled using a palladium chloride catalyst to form Product C.

In Step 4, Product C was reacted with a furan derivative, herein called 1-(dicyanomethylene)-2-cyano-4-(4-cyclohexylphenyl)furan, to yield the monoepoxy functional EO chromophore having the following Structure **III.**

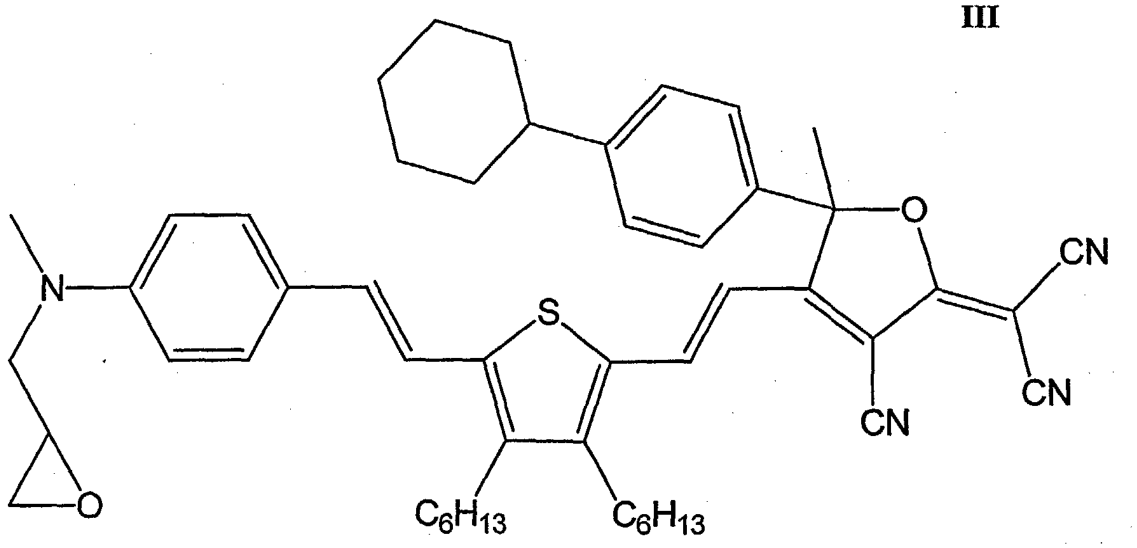

**III**

Compounds containing polymerizable episulfide, oxetane and thietane groups are similarly prepared.

Example 2: Preparation of an EO Chromophore With Two Polymerizable Groups.

To prepare a diepoxy-functional EO chromophore according to the invention, Step 2 of Figure 1 was modified as shown in Figure 2 in that 4-iodoaniline was used in place of 4-iodo-*N*-methylaniline. The 4-iodoaniline was reacted with two moles of epichlorohydrin to form 4-iodo-*N*,*N*-bis(3-chloro-2-hydroxychloropropyl)aniline, which was subsequently treated with KOH to yield the diepoxy species represented by the following Structure IV.

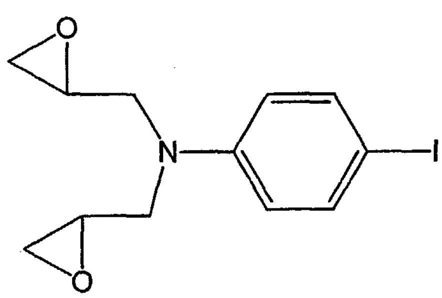

**IV.**

Subsequent reactions using IV were the carried out in the same manner as described above and in Figure 1 to yield a diepoxy functional EO chromophore.

Additional chromophores can be formed in which one or both of the epoxy groups illustrated above have been replaced by the corresponding episulfide group (O replaced by S), oxetane and thietane groups. In addition, the nitrogen atom of Structure **IV** can be replaced by a sulfur atom that will have a single pendent group. The resulting chromophores, made substantially as described above, can be deemed to be moieties represented by the following Structure V,

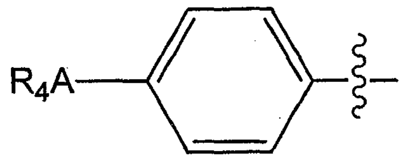

V

wherein:

$R_4$ is epoxy, episulfide, oxetane or thietane, and

A = S or $NR_5$, wherein $R_5$, independently of $R_4$, is ($C_1$-$C_3$) alkyl, epoxy, episulfide, oxetane or thietane.

In the case of the aniline moieties described below, mixtures of the various groups comprising $R_4$ and $R_5$ can be present in a single chromophore species. The preferred $C_1$-$C_3$ alkyl group is methyl ($-CH_3$).

Thus, in various embodiments of the invention:

The aniline or N-methylaniline moiety illustrated in Structures **III** and **IV** can be replaced by a thiophenol moiety, for example, $HS-C_6H_4-$. These reactions are carried out using 4-iodothiophenol in a manner described above using 4-iodo-*N*-methyl aniline or 4-iodoanaline. The resulting product will contain a single epoxy, or other moiety as described herein, attached to the sulfur atom.

The epoxy moiety, as illustrated, can be replaced by the corresponding oxetane moiety. The substitution is accomplished by using 2-chlorooxetane in place of epichlorohydrin.

The epoxy and oxetane moieties described above can be replaced by similar moieties wherein the oxygen atom is replaced by a sulfur atom (e.g. episulfide and thietane moieties attached to A).

Preparation of a Host Polymer

A maleimide copolymer, as an illustrative host polymer for use with one of the EO chromophores according to the invention, was prepared by reaction of 52.90 g (0.2 mol) *N*-pentafluorophenylmaleimide, 22.88 g (0.08 mol) 1*H*, 1*H*, 5*H*-octafluoropentylacrylate (VISCOAT™ 8F, Osaka Organic Chemical Ind. Co., Ltd., Osaka, Japan), 15.12 g (0.12 mol) glycidyl methacrylate, and 142 mg 2,2-dimethyl(2,5-di(*tert*-butylperoxy))hexane (TRIGONOX™ 101, Akzo Nobel Chemical Inc, Chicago, IL) were dissolved in 75 g cyclohexanone. The polymerization was carried out in a sealed 500 mL flask purged with nitrogen or argon at 130 °C for about 4 hours. The copolymeric material was purified by precipitation in absolute ethanol, filtered, and then dried overnight in a vacuum oven at 60 °C. The maleimide copolymer is illustrated in Figure 3.

While a maleimide copolymer host was found to be particularly advantageous, other types of polymers and copolymers, including other maleimide copolymers, and their oligomeric "precursors', can also be used. Examples, without limit, include polymers, copolymers and oligomers based on acrylate, methacrylate, polyesters, polyimides, cellulose acetate, vinyl acetate, polysulfones, and urethane materials known in the art, and included such compounds wherein one or a plurality of the hydrogen atoms of the carbon skeleton have been replaced by fluorine atoms and/or fluorinated or highly fluorinated alkyl groups. The host polymers may be directly reactive with the reactive groups pendent on the chromophore or they may have pendent groups reactive with the chromophore's reactive groups.

Photocurable Compositions

Photocurable compositions of the invention generally comprise:

an EO chromophore as represented Structure **I** wherein D, B, $R_2$ and $R_3$ are as described elsewhere herein,

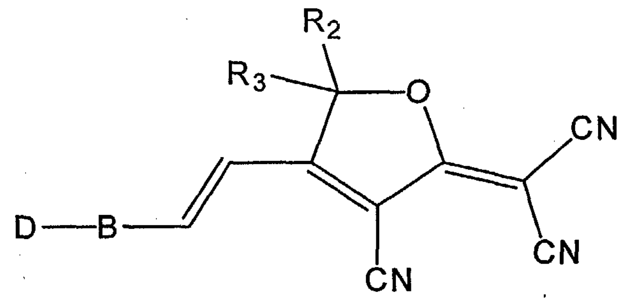

I

a polymer, copolymer or oligomer (e.g., acrylates, methacrylates, polyethers, polysulfones, polyesters, maleimide-acrylate or methacrylate copolymers, vinyl carboxylates, vinyl acetate or chloride, and other such substances as described elsewhere herein) containing the groups reactive with the chromophore's reactive groups, and optionally, a photoinitiator.

In one preferred embodiment, photocurable compositions of the invention generally comprise:
EO chromophores as represented by Structure **II** wherein D, Z, $R_1$, $R_{1a}$, $R_2$ $R_3$ and q are as described elsewhere herein,

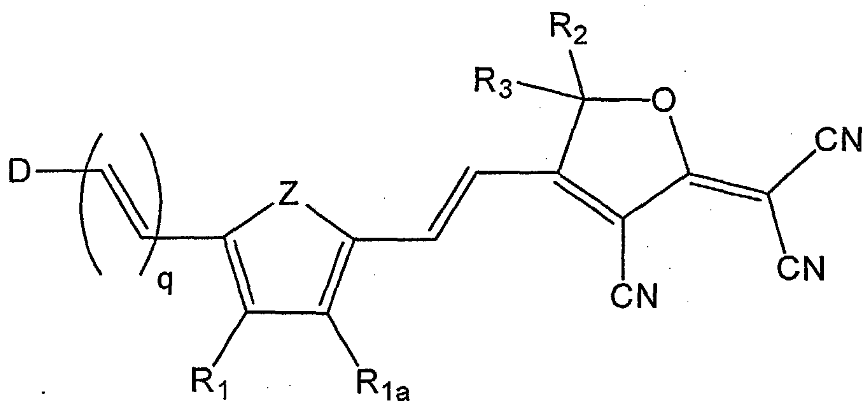

II

a host polymer, copolymer or oligomer (e.g., acrylates, methacrylates, polyethers, polysulfones, polyesters, maleimide-acrylate or methacrylate copolymers, vinyl carboxylates, vinyl acetate or chloride, and other such substances as described elsewhere herein) either directly reactive with the chromophore's reactive groups or containing the groups reactive with the chromophore's reactive groups, and

optionally, a photoinitiator, with the preferred photoinitiator being a cationic initiator.

In another preferred embodiment, photocurable compositions of the invention generally comprise:

EO chromophores as represented by Structure **IV**,

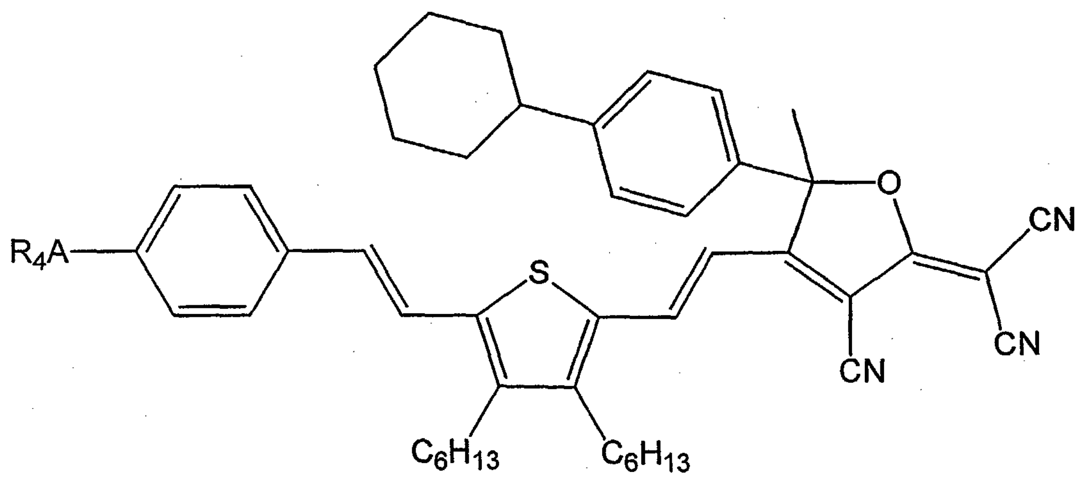

IV

wherein $R_4$ and A are as described elsewhere herein, and the composition can include mixtures of chromophores with combinations of $R_4$ and A, and further, where S in structure **VI** can be replaced by O; and

a copolymer of a (i) maleimide first monomer and (ii) one or a plurality of second monomers selected from the group consisting of acrylate and methacrylate monomers with cationic curable groups such as epoxide, episulfide, oxetane, and thietane groups; and

a polymerization initiator.

In a preferred embodiment, the plurality of second monomers which are used comprise a highly fluorinated acrylate monomer (e.g., HO-C(O)-C($R_f$)=$CH_2$, where $R_f$ is a highly fluorinated $C_1$-$C_6$ alkyl group or a phenyl group) and a glycidyl methacrylate monomer.

In an additional preferred embodiment, the maleimide monomer contains an N-pendent moiety selected from the group consisting of fluorinated or highly fluorinated $C_1$-$C_6$ alkyl, phenyl and biphenyl groups, highly fluorinated groups being preferred.

The reaction between the chromophore and the host polymer, oligomer or mixture of host polymers or oligomers can be carried out by the use of initiators that are either thermally or photolytically activated to initiate polymerization. In preferred embodiments, the initiators are cationic initiators that are photolytically activated. Examples of such preferred photoinitiators include triarylsulfonium, tetraalkylphosphonium and diaryliodinium salts of large protected anions such as hexafluorophosphates or antimonates. Further, with care and in an inert atmosphere, the EO polymer host combination can be thermally cured without the use of thermal curing initiators.

Preparation of EO Polymer Films

An EO polymer solution was prepared by dissolving one or a mixture of the chromophores and the maleimide copolymer in cyclohexanone to which 1-3 weight percent (wt.%) of photoinitiator was added. For example, a chromophore mixture can comprise epoxy, episulfide, oxetane or thietane-containing chromophores. The resulting EO polymer solution was filtered through a 0.2 μm syringe filter and spin-coated onto a substrate surface. When photocured using actinic radiation, and on a solvent-free, photoinitiator-excluded basis, the composition comprises 1-40 volume percent chromophore and 99-60 volume percent copolymer. Higher concentrations of chromophore can also be used.

Measurements

Absorbance spectroscopy of the EO polymer film was performed using a Perkin-Elmer 9000 UV-NIT spectrometer. The film thickness and refractive index were measured using a Metricon 2010 Prism Coupler. FTIR spectra were recorded using a Mattson Satellite FTIR spectrometer at 4 $cm^{-1}$ resolution.

The optical loss of the EO polymer film was measured from a slab waveguide using the prism-coupling method such as that described by R.E. Ulrich and R. Torge, "Measurement of Thin Film Parameters With a Prism Coupler", Applied Optics 12, 2901 (1973). The waveguide fabrication process is described below and is illustrated in Figs. 7 to 18.

Chromophore stability to laser radiation was measured as described below using the apparatus of Figure 4.

Refractive Index and Optical Loss of EO Polymer Film

The EO polymer films prepared herein were found to have very smooth surfaces with a minimum of roughness. No phase separation was observed in EO polymer blends containing 25 wt.% of the EO chromophore. The refractive index of EO polymer films containing different concentrations of the EO chromophore is shown in Figure 5. Pure maleimide copolymer prepared as described above (no EO chromophore) was found to have a refractive index of 1.46 at 1550 nm. This refractive index is very close to that of silica (1.46 at 1550 nm, declining to 1.44 at 1810 nm). This nearly perfect refractive index match offers lower coupling loss after waveguide fabrication. The refractive index of the pure EO chromophore is estimated at 1.64 ±0.01 at 1550 nm. The refractive indices of the polymers increase linearly with the volume concentration of the chromophore as shown in Figure 5.

The optical losses for slab waveguides having differing concentrations of EO chromophore are shown in Figure 6. A pure maleimide copolymer (no EO chromophore) film has an optical loss of 0.5 dB/cm at 1550 nm as shown at the lower right hand comer of the Figure 6 plot. A typical polymer modulator needs a dopant level of approximately 20 vol. % chromophore to operate effectively. When a maleimide copolymer is used as the host for the EO chromophore, the data in Figure 6 suggests that the resulting slab waveguide will have an optical loss of 0.8 dB/cm, which is lower than that of most other reported host polymer materials.

EO Chromophore Stability

The stability of the EO chromophore to near infrared radiation is important. Near IR lasers, e.g., a 1550 nm CW laser, are used in optical communication systems. Consequently, it is important that the EO chromophore is not degraded by long term exposure to 1550 nm IR radiation.

The laser stability of the EO polymer thin film was measured as follows using the set-up shown in Figure 4. A small amount of the EO polymer 14 was placed on the end of a single mode optical fiber 12 which is coupled to a continuous wave laser 16 (not illustrated; a tunable erbium laser obtainable from IRE-Polus Group). The fiber with polymer attached was contacted with a quartz substrate 20, which was in the vertical position, and the polymer was photo-cured to thus connect the fiber, polymer and substrate. A photodetector 30 with optical fiber 40 attached thereto was positioned opposite the quartz substrate so that laser light passing through the quartz substrate would be detected by the detector and transmitted through fiber 40 to a suitable measuring device. Laser light 18, illustrated as a central area in fibers 12 and 40, passes though the fiber 12, cured polymer 14 and quartz substrate 20, and is detected by detector 30. Using this method, one can detect thermomechanical and thermochemical damage to the EO polymer film as a result of laser irradiation.

Experiments were set up using the apparatus shown in Figure 4 to measure the change in the transmission power of a continuous wave laser after passing through an EO polymer film. After exposure to laser power as high as 1000 mW for more than 1 hour, the EO polymer sample prepared according to the invention did not show any thermomechanical or thermochemical damage. Power transmission after exposure remained the same as before exposure. Since optical loss measurements indicate that absorption by the EO chromophore is relatively weak at 1550 nm (~30% in a 1 cm path length), a weak interaction between the near IR laser and the EO polymer was expected. Without being held to any particular theory, the use of a low optical loss host polymer, for example, the maleimide copolymer used in the present invention, not only reduced total insertion loss in optical devices (i.e., low propagation losses and low coupling losses), but is also believed to improve the thermal stability due to a reduction in thermo-optic effects from absorption of the NIR laser radiation.

Exemplifying the use of the EO polymers of the invention for the formation of optical and electro-optical elements and devices, waveguides were fabricated according to the process illustrated in Figures 7-12 and Figures 13-18. Other elements and/or devices can be fabricated in similar fashion.

General Method of Fabricating Optical Devices and Elements

Generally, an optical or electro-optic structure can be fabricated from a composition containing a $\mu\beta$ chromophore high as described herein as follows. First, a substrate or support can, optionally, be coated using methods known in the art with a first cladding material having a refractive index lower than that of the cured chromophore-containing composition containing the chromophore. If the support is made of a material having a refractive index lower than that of the chromophore containing composition, this step may be eliminated. For example, the support may be made of a polymeic material or have already applied thereto in an independent process a polymeric material having a refractive index lower than that of the chromophore containing composition. Subsequently, the steps of the method generally proceed as follows:

applying to the above substrate a polymerizable composition containing a chromophore having at least one terminal cationically polymerizable group to form a a photopolymerizable composition layer, said composition including

at least one cationic photoinitiator;

imagewise exposing the photopolymerizable composition layer to sufficient actinic radiation to effect the at least partial polymerization of an imaged portion and to form at least one non-imaged portion of said composition layer;

removing said at least one non-imaged portion without removing said imaged portion, thereby forming a light transmissive pattern or core from said imaged portion;

applying a second cladding polymerizable composition onto the core layer; and

at least partially curing said second cladding composition, wherein said cladding and the core-interfacing surface of said support have a lower refractive index than said pattern layer.

The first and second cladding layers may be made of any polymerizable composition compatable with the composition of the chromophore-containing core compositon. Examples of such cladding materials, without limiting the invention, include polyacrylates, polymethacrylates, polyethers and polythioethers, polysulfones, polyesters, maleimide-acrylate or methacrylate copolymers, vinyl carboxylates, vinyl acetate or chloride, ethylene, propylene,. stryrene, urethanesand similar polymers, copolymer and oligomers known in the art, including partially or highly halogenated derivatives thereof, which have a refractive index lower than that of the cured chromopkore-containing composition. To further illustrate the invention, the follow detailed description

Figures 7-12: Fabricating a Ridge Waveguide.

The following steps correspond to Figures 7-12.

A cladding was spin coated with a first polymeric cladding layer material having an refractive index less than the refractive index of the optical waveguide material that will be subsequently applied. After application of the cladding material, the material was exposed to actinic radiation, typically UV radiation, of an intensity and for a time as is typically used in the art, and then baked at selected temperature in the range of 150-200 °C for a selected time in the range of 10-60 minutes to produce a substrate having a first bottom cladding layer adhered thereto. Preferred selected temperatures and times are in the range 160-170°C and 10-20 minutes, respectively.

A second cladding layer material having an refractive index less than that of the optical waveguide material was then spin coated on the first cladding material and prebaked at a selected temperature in the range of 60-120 °C for a selected time in the range of 3-15 minutes.

A positive photomask was placed over the second cladding material and actinic radiation was applied as above followed by a baking as described in (a) to produce a cured ridge waveguide trench form.

A waveguide trench was developed by washing away uncured polymer with a solvent in which the polymer is soluble (E.g., methyl ethyl ketone (MEK)).

The EO polymer was then spin coated over the developed wafer of Step (d) to form a ridge waveguide, which was then cured using actinic radiation (e.g., UV radiation) followed by baking,under nitrogen, at a temperature in the range of 110 to 170 °C for a time in the range of 5 to 40 minutes. Preferred temperature and times are in the range of 130 to 160 °C and 10 to 20 minutes. If no photoinitiator was used in the EO polymer mixture, the curing was done in a vacuum over at a selected temperature the range of 160 to 180 °C for a selected time in the range of 5 to 40 minutes.

A top overcladding material was then spin coated on the wafer of Step (e), and cured as described above to produce an overclad layer. One or a plurality of electrodes were then placed on the overcladding and above the ridge waveguide by methods known in the art.

Figures 13-18: Fabricating a Channel Waveguide.

The following steps correspond to Figures 13-18.

A cladding was spin coated with a first polymeric cladding layer material having an refractive index less than the refractive index of the optical waveguide material that will be subsequently applied. After application of the cladding material, the material was exposed to actinic radiation, typically UV radiation, of an intensity and for a time as is typically used in the art, and then baked at selected temperature in the range of 150-200 °C for a selected time in the range of 10-60 minutes to produce a substrate having a first bottom cladding layer adhered thereto. Preferred temperatures and times are in the range of approximately 160-170 °C and approximately 10-20 minutes, respectively.

The EO polymer was then spin coated on the cladding layer of and prebaked in an inert atmosphere, usually nitrogen, at a selected temperature in the range of 110 to 170 °C for a selected time in the range of 5 to 40 minutes. Preferred temperature and times are in the range of 130 to 160 °C and 10 to 20 minutes.

A photomask was placed over prebaked EO polymer material and actinic radiation was applied as above followed by a post-baking in an inert atmosphere, usually nitrogen at a selected temperature in the range of 110 to 170 °C for a selected time in the range of 5 to 40 minutes to produce a cured channel waveguide. Preferred temperature and times are in the range of 130 to 160 °C and 10 to 20 minutes.

A channel waveguide was developed by washing away uncured polymer with a solvent in which the polymer is soluble; for example, methyl ethyl ketone (MEK).

A top overcladding material was spin coated on the wafer of Step (e), and cured by the use of actinic radiation and post-baking as described above to produce a channel waveguide.

One or a plurality of electrodes were then placed on the overcladding and above the channel waveguide by

methods known in the art.

Poling of EO Polymers

The electrical poling process was tested using a contact poling method with an approximately 4 μm EO polymer film coated on an ITO coated quartz slide. At a poling voltage of 135 V and a poling temperature of 130 °C, a $r_{33}$ value of approximately 18 pm/V was observed. The color of the sample changes slightly, but the chromophore did not break out, separate, migrate, leak or otherwise disassociate itself from the host polymer matrix. Consequently, it was determined that the poling process can tolerate a small amount of cationic photoinitiator in the curing system.

The results presented herein indicate that a the high μβ chromophores disclosed herein can be cationically cured into a photodefinable low loss, high $T_g$ fluorinated maleimide copolymer to form waveguide structures having good optical stability and processing capabilities. The two fabrication processes disclosed herein, when combined with the novel chromophores disclosed herein, offer the opportunity to manufacture high speed EO polymer photonic devices.

The foregoing examples of specific compositions, processes, articles and/or apparatus employed in the practice of the present invention are, of course, intended to be illustrative rather than limiting, and it will be apparent the numerous variations and modification of these specific embodiments may be practiced within the scope of the appended claims.

## Claims

**1.** An electro-optic chromophore comprising a compound whose formula is represented by the structure **I**:

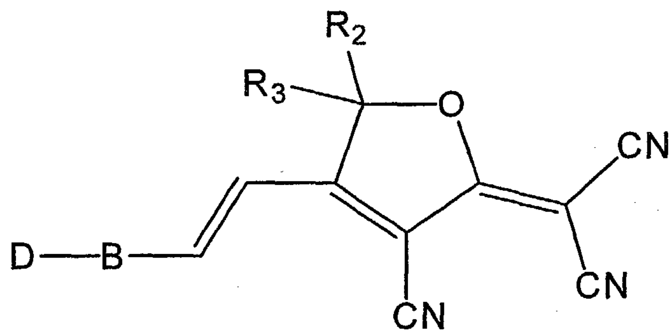

**I**

wherein

(a) D is an electron donor having one or a plurality of terminally pendent, polymerizable cyclic ether or cyclic thioether groups;
(b) B is or contains at least one bivalent aromatic ring; and
(c) $R_2$ and $R_3$ are each, independently, either H or a substituted or unsubstituted $C_1$-$C_{10}$ alkyl, a substituted or unsubstituted $C_2$-$C_{10}$ alkenyl, a substituted or unsubstituted aryl, a substituted or unsubstituted alkylaryl, a substituted or unsubstituted carbocycle, a substituted or unsubstituted heterocycle, or a substituted or unsubstituted cyclohexyl; or $R_2$ and $R_3$ together form a ring structure or substituted ring structure

**2.** The chromophore compound according to claim 1, **characterized in that** D terminally contains one or a plurality of polymerizable groups selected from the group consisting of epoxy, episulfide, oxetane and thietane.

**3.** The chromophore compound according to claim 1, **characterized in that** D is selected from the group consisting of-p-$C_6H_4$-$AR_4$ or -p-$C_6H_4$-p-$C_6H_4$-$AR_4$, and-naphthalene- $C_6H_4$-$AR_4$, wherein:

(a) A is S or $NR_5$,
(b) $R_4$ is selected from the group consisting of epoxy, episulfide, oxetane and thietane, and
(c) $R_5$ is selected from the group consisting of $C_1$-$C_6$ alkyls, epoxy, episulfide, oxetane and thietane.

**4.** The chromophore compound according to claim 2 or 3, further **characterized in that** said compound is cationically polymerizable or thermally polymerizable with second compound selected from the group consisting of polymers and oligomers having pendent groups reactable with the groups pendent from D.

**5.** The chromophore compound according to one of claims 1-4, further **characterized in that**

(a) D—B—is

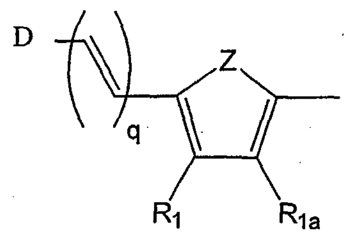

(b) Z is O or S;
(c) $R_1$ and $R_{1a}$ each are, independently, H or a $C_1$-$C_{10}$ alkyl group; and
(d) q is in the range of 1 to 3.

**6.** The chromophore compound according to one of claims 1-5, further **characterized in that** the compound has the formula is represented by structure **VI**:

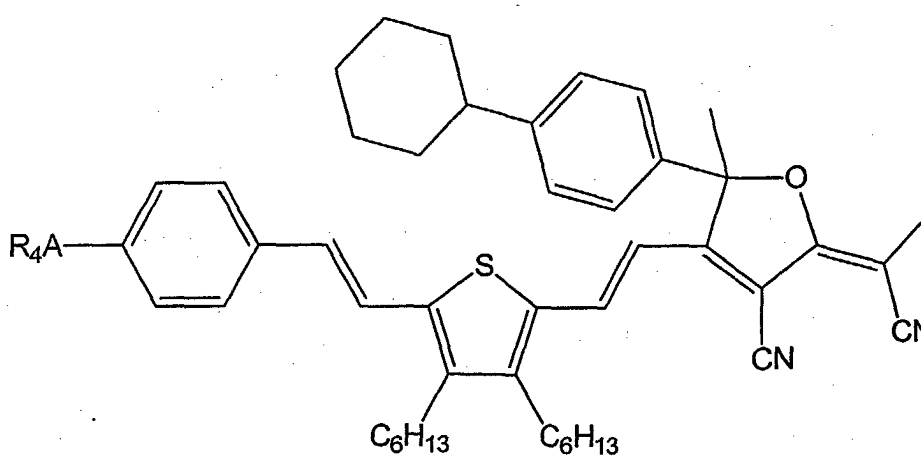

VI

wherein

(a) A is S or $NR_5$,
(b) $R_4$ is selected from the group consisting of epoxy, episulfide, oxetane and thietane, and
(c) $R_5$ is selected from the group consisting of $C_1$-$C_6$ alkyls, epoxy, episulfide, oxetane and thietane.

**7.** The compound according to claim 6, further **characterized in that** said compound is cationically or thermally polymerizable with polymers and oligomers having pendent groups reactable with the groups pendent from $R_4A$, said polymers and oligomers being selected from the group consisting of polyacrylates, polymethacrylates, polyethers and polythioethers, polysulfones, polyesters, maleimide-acrylate or methacrylate copolymers or oligomers, vinyl carboxylates, vinyl acetate or chloride, ethylene, propylene, stryrene, and similar polymers or oligomers known in the art.

**8.** A photocurable composition comprising:

(a) a chromophore compound in accordance with one of claims 1-6,
(b) a host polymer or oligomers containing the groups reactive with the chromophore compound's reactive groups; and
(c) a cationic photoinitiator.

**9.** The curable composition according to claim 8, wherein the host polymer or oligomer reactive with the chromophore compound's reactive groups are selected from the group consisting of acrylates, methacrylates, polyethers and polythioethers, polyesters, maleimide acrylates and methacrylates copolymers, vinyl carboxylates, vinyl acetate and vinyl chloride, ethylene, propylene, and styrene.

**10.** The composition according to claim 8 or 9, further **characterized in that** the host polymer is a copolymer of a maleimide first monomer, and one or a plurality of second monomers.

**11.** The composition according to claim 10, further **characterized in that** the host polymer is a copolymer of a maleimide first monomer, and a second monomer selected from the group consisting of acrylates and methacrylates.

**12.** The composition according to claim 10 or 11, further **characterized in that** said plurality of second monomers comprise a glycidyl methacrylate monomer and a highly fluorinated acrylate monomer.

**13.** The composition according to one of claims 8-12, further **characterized that** when photocured and on a photoinitiator-excluded basis, the cured composition comprises 1-40 volume percent chromophore and 99-60 volume percent copolymer.

**14.** The composition according to one of claims 8-13, further **characterized in that** when photocured the cured composition exhibits a $r_{33}$ value greater than 12 pm/V at a wavelength of 1550 nm.

**15.** The composition according to claim 8-13, further **characterized in that** when photocured the cured composition exhibits a $r_{33}$ value greater than 15 pm/V at 1550 nm.

**16.** An optical device or element made from a photocured composition in accordance with one of claims 1-15.

**18.** A method for fabricating an optical or electro-optic structure containing a photodefinable high μβ chromophore layer in accordance with any one of claims 1-15, said method comprising the steps of:

(a) applying to a substrate a composition containing a chromophore having at least one terminal cationically polymerizable group to form a photopolymerizable composition layer, said composition including at least one cationic photoinitiator;
(b) imagewise exposing the photopolymerizable composition layer to sufficient actinic radiation to effect the at least partial polymerization of an imaged portion and to form at least one non-imaged portion of said composition layer;
(c) removing said at least one non-imaged portion without removing said imaged portion, thereby forming a light transmissive pattern from said imaged portion;
(d) applying an cladding polymerizable composition onto the patterned layer; and
(e) at least partially curing said cladding composition, wherein said cladding and the core-interfacing surface of said support have a lower refractive index than said core.

STEP 1

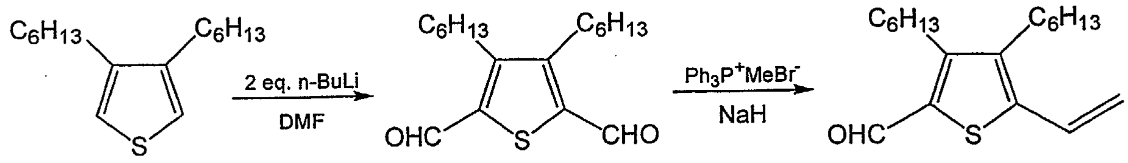


**A**

STEP 2

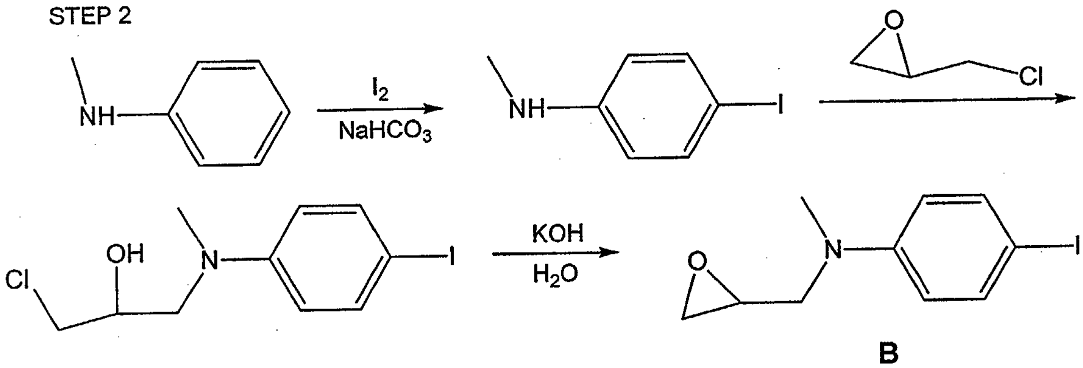


**B**

STEP 3

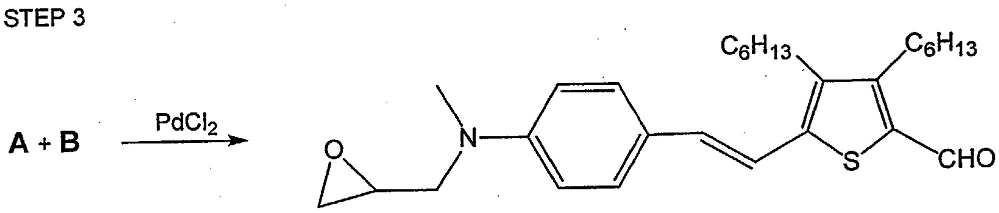


**C**

STEP 4

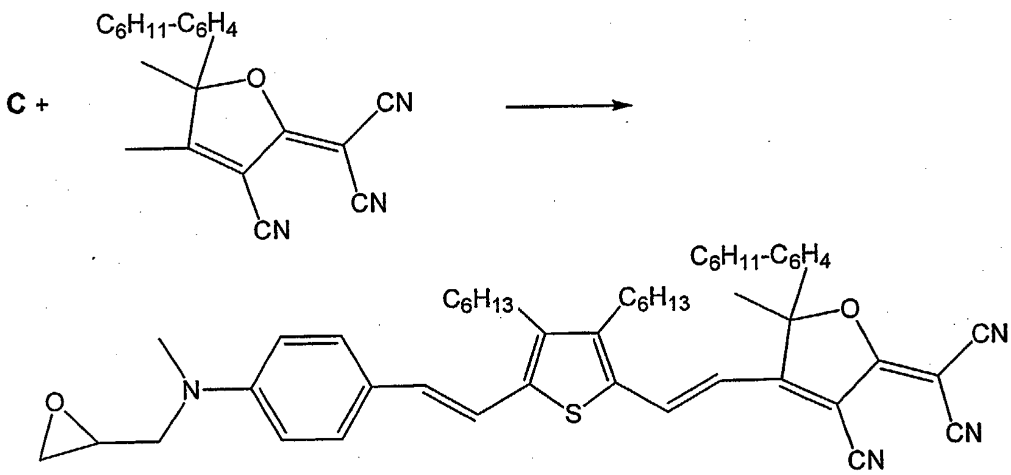


**Figure 1**

Figure 2

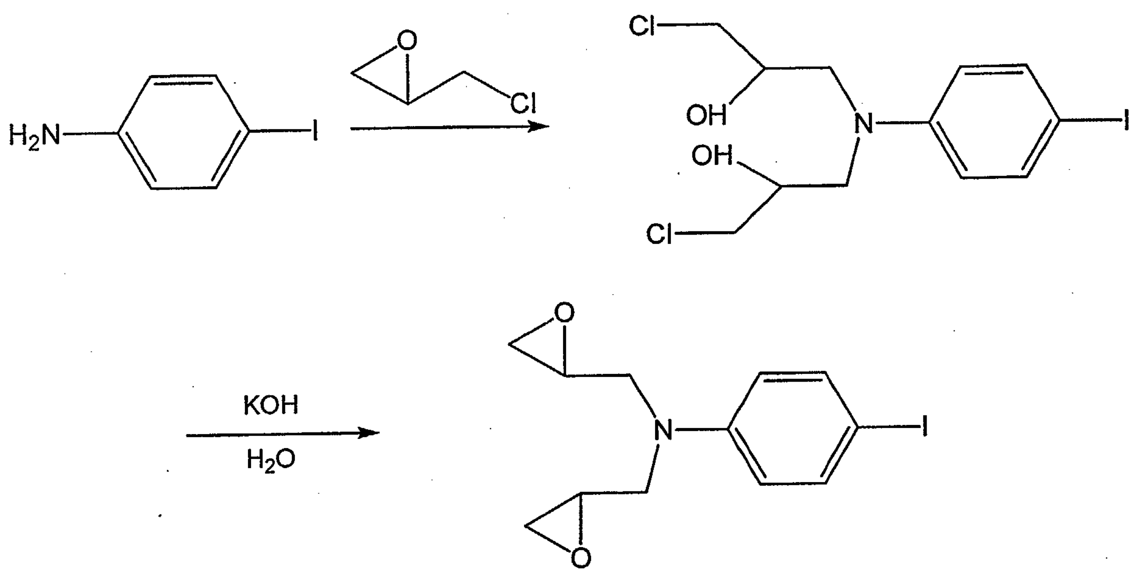

Figure 3

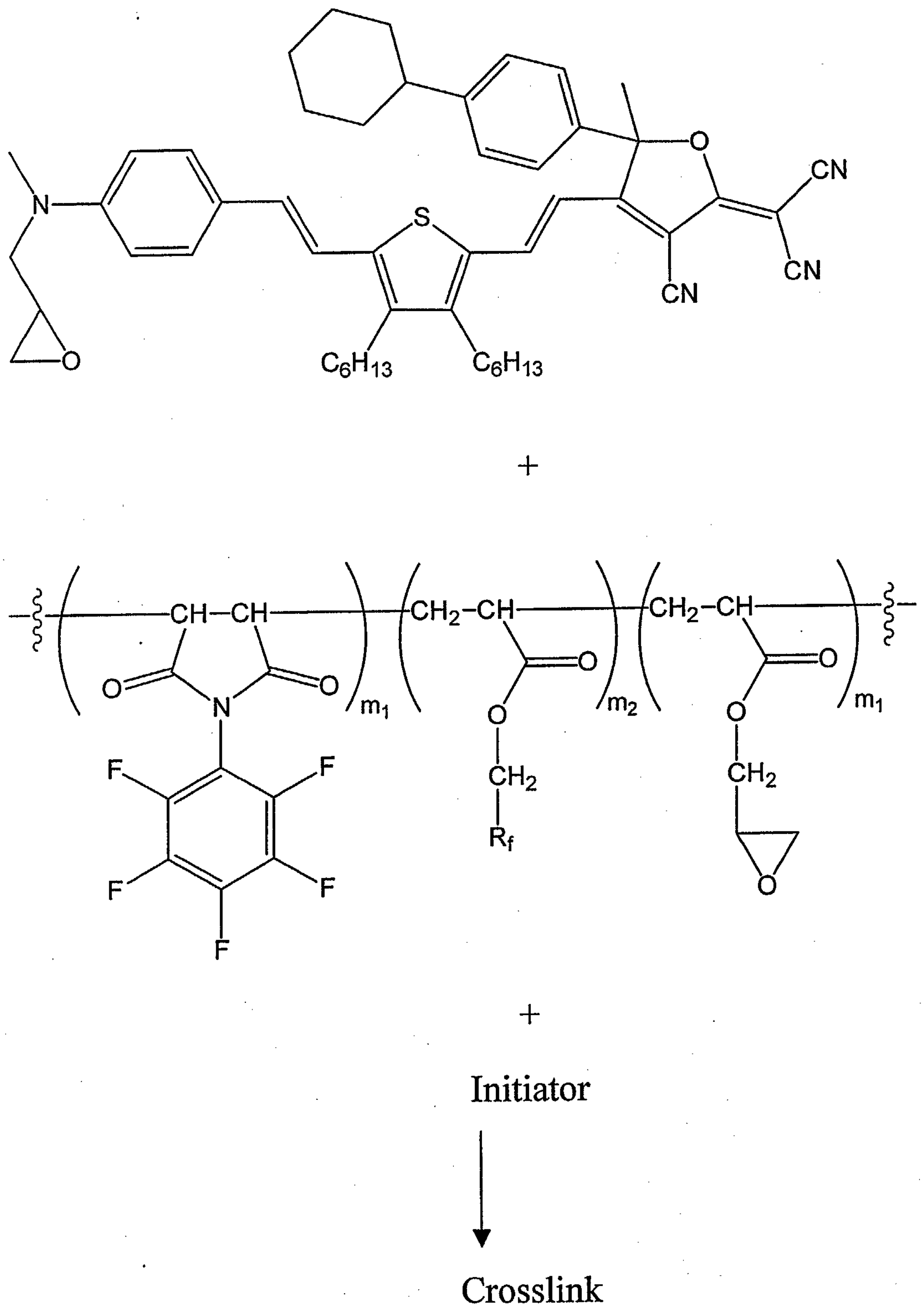

Figure 4

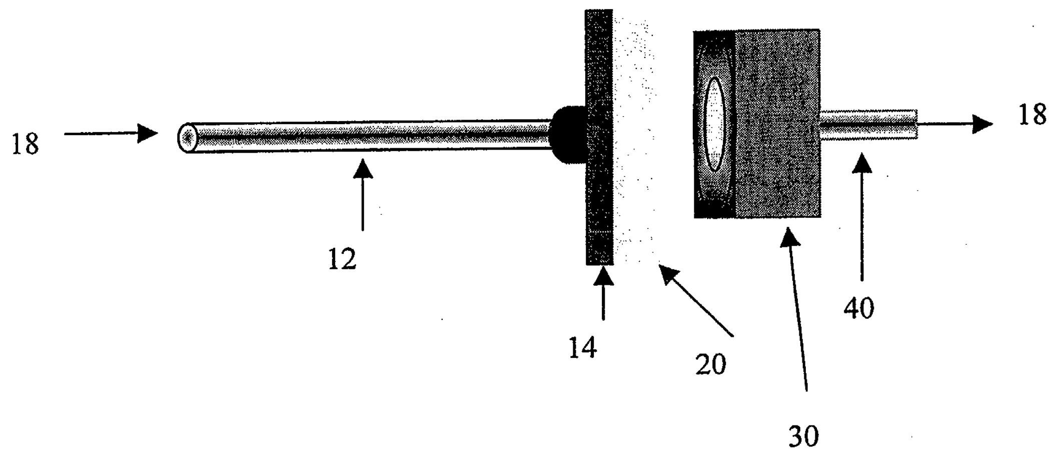


Figure 5

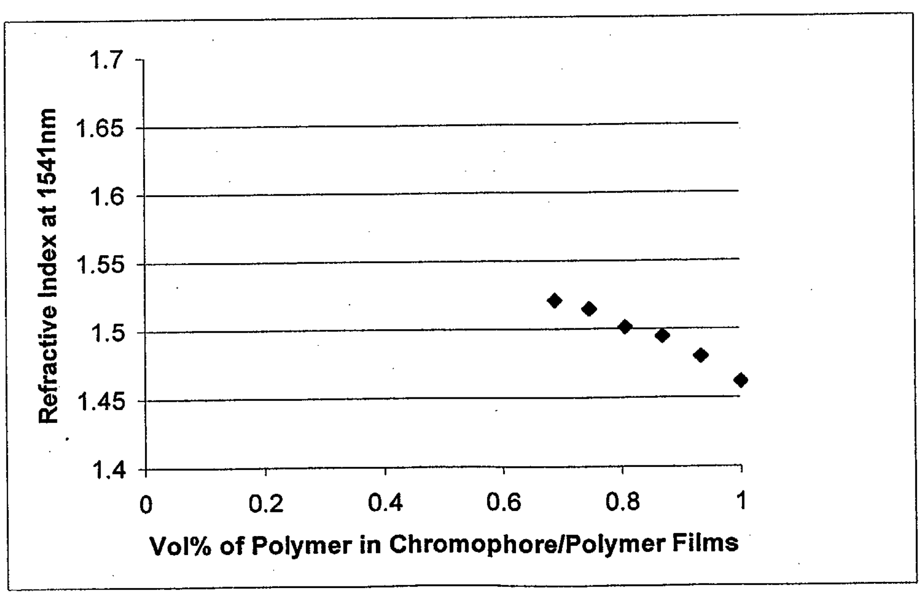

Figure 6

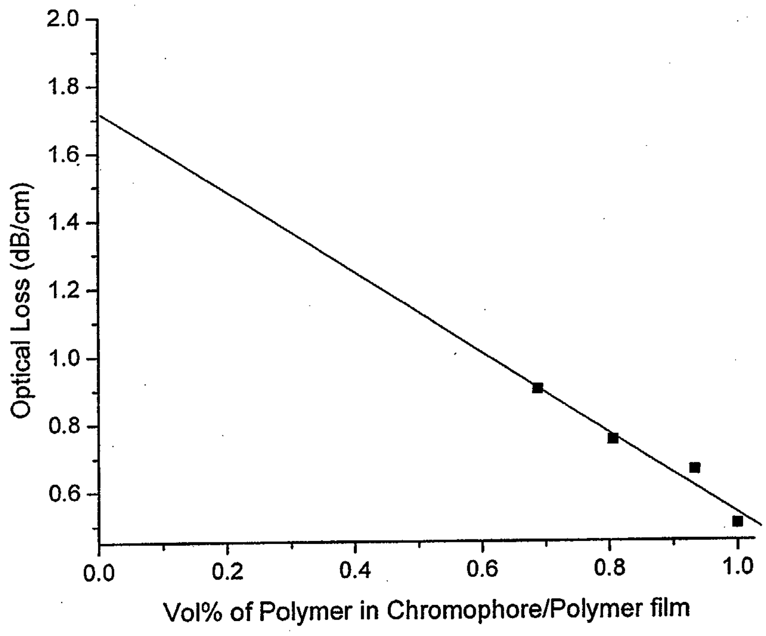


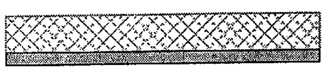

Figure 7

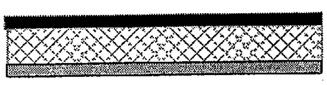

Figure 8

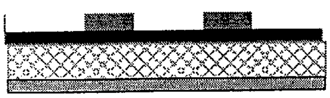

Figure 9

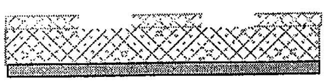

Figure 10

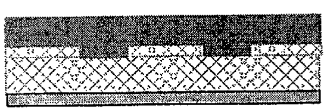

Figure 11

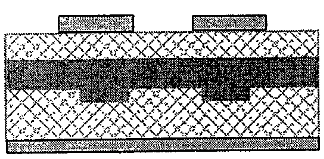

Figure 12

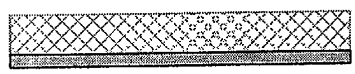

Figure 13

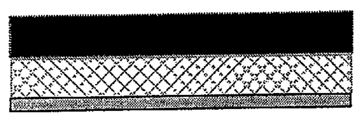

Figure 14

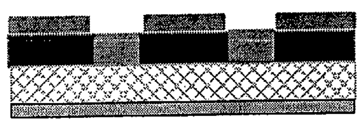

Figure 15

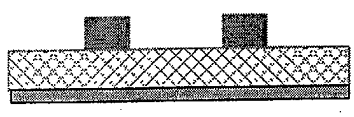

Figure 16

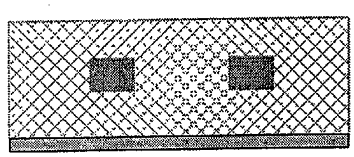

Figure 17

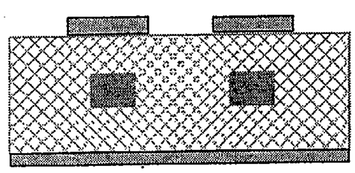

Figure 18